# EUROPÄISCHE PATENTANMELDUNG

(11) **EP 4 008 576 A1**
(43) Veröffentlichungstag der Anmeldung: **08.06.2022**
(21) Anmeldenummer: 21211361.7
(22) Anmeldetag: 30.11.2021
(51) Int. Cl.: B60H 1/00, F16J 15/02

(54) **VERFAHREN ZUM MONTIEREN EINER DICHTUNGSEINRICHTUNG ZWISCHEN EINEM GEHÄUSE EINER KLIMATISIERUNGSEINRICHTUNG UND EINER IN EINEM KRAFTFAHRZEUGS VORHANDENEN TRENNWAND**

(30) Priorität: 02.12.2020 DE 102020215220
(71) Anmelder: MAHLE International GmbH, 70376 Stuttgart (DE); WOCO Industrietechnik GmbH, 63628 Bad Soden-Salmünster (DE)
(72) Erfinder: FEITH, Thomas, 70825 Korntal-Münchingen (DE); SICKELMANN, Michael, 70806 Kornwestheim (DE); HEDERER, Robin, 63636 Brachttal (DE); SCHREIBER, Ronny, 63619 Bad Orb (DE)
(74) Vertreter: BRP Renaud & Partner mbB Rechtsanwälte Patentanwälte Steuerberater

(57) **Zusammenfassung**

Verfahren zum Montieren einer Dichtungseinrichtung (10) zwischen einem Gehäuse (2) einer Klimatisierungseinrichtung (1) und einer in einem Kraftfahrzeug vorhandenen Trennwand (3), umfassend die folgenden Maßnahmen: Anordnen des Gehäuses (2) und der Trennwand (3) so relativ zueinander, dass eine im Gehäuse (2) vorhanden Gehäuseöffnung (7) und eine in der Trennwand (3) vorhandenen Wandungsöffnung (8) benachbart zueinander positioniert sind, Anordnen der Dichtungseinrichtung (10) mit einem als Profilteil (23) ausgebildeten rahmenförmigen Dichtkörper (12), der im Profil im Wesentlichen V-förmig mit einem ersten und zweiten Schenkel (11a, 11b) ausgebildet ist, zwischen den beiden Öffnungen (7, 8), und Verringern eines Abstands (a) zwischen den beiden Öffnungen (7, 8) durch Bewegen des Gehäuses (2) auf die Trennwand (3) zu zumindest solange, bis ein die Schenkel (11a, 11b) miteinander verbindender Übergang (15) zur Wandungsöffnung (8) hin oder von dieser weg umklappt.

## Beschreibung

Die Erfindung betrifft ein Verfahren zum Montieren einer Dichtungseinrichtung zwischen einem Gehäuse einer Klimatisierungseinrichtung und einer im oder am Fahrzeuginnenraum eines Kraftfahrzeugs vorhandenen Trennwand. Die Erfindung betrifft ferner eine Dichtungseinrichtung sowie ein Kraftfahrzeug mit einer solchen Dichtungseinrichtung.

Klimatisierungsgeräte zur Klimatisierung des Fahrzeuginnenraums eines Kraftfahrzeugs werden typischerweise an einer im Kraftfahrzeug vorgesehenen Trennwand montiert, die den Fahrzeuginnenraum des Kraftfahrzeugs vom Motorraum oder von der äußeren Umgebung des Kraftfahrzeugs trennt. Eine solche Trennwand kann eine Spritzwand sein.

Für das Klimatisierungsgerät benötigte Leitungen, beispielsweise Fluidleitungen zum Führen eines Kältemittels, aber auch elektrische Leitungen werden typischerweise vom Fahrzeuginnenraum aus an das Klimatisierungsgerät angeschlossen. Daher ist in besagter Trennwand typischerweise eine Durchgangsöffnung ausgebildet, die für besagte Leitungen eine Durchführung zum Klimatisierungsgerät ausbildet.

Eine solche Durchführung muss dabei fluiddicht ausgebildet sein, um ein Eindringen von Fluid aus dem Motorraum bzw. dem Raum vor der Trennwand oder von außen - beispielsweise in Form von Feuchtigkeit - zu verhindern sowie den Eintritt von Feuchtigkeit oder Wasser in den Fahrzeuginnenraum zu verhindern. Typischerweise wird daher die Durchgangsöffnung der Trennwand unter Verwendung einer geeigneten Dichtung zwischen Klimatisierungsgerät und Trennwand abgedichtet.

Als nachteilig erweist sich bei einem solchen Vorgehen jedoch die typischerweise technisch aufwändige Montage der Dichtung zwischen dem Gehäuse des Klimatisierungsgerät und der Trennwand im Bereich der Durchführung.

Es ist daher eine Aufgabe der vorliegenden Erfindung, ein verbessertes Verfahren zum Montieren einer Dichtungseinrichtung zwischen einem Klimatisierungsgerät - im Folgenden auch als "Klimatisierungseinrichtung" bezeichnet - und besagter Trennwand zu schaffen, mittels welchem die Dichtungseinrichtung besonders einfach montiert werden kann und dennoch hohe Dichtigkeitsanforderungen erfüllt werden.

Eine weitere Aufgabe der vorliegenden Erfindung besteht darin, eine verbesserte Ausführungsform für eine solche Dichtungseinrichtung zu schaffen, die insbesondere zur Durchführung des verbesserten Montageverfahrens verwendet werden kann.

Diese Aufgaben werden durch den Gegenstand der unabhängigen Patentansprüche gelöst. Bevorzugte Ausführungsformen sind Gegenstand der abhängigen Patentansprüche.

Grundidee der Erfindung ist demnach, eine rahmenförmige Dichtung - im Folgenden als "Dichtungseinrichtung" bezeichnet - mit einem, bevorzugt elastisch verformbaren, rahmenförmigen Dichtkörper als geschlossenes Profilteil mit im Profil V-förmiger Geometrie auszubilden und so zwischen einer im Gehäuse der Klimatisierungseinrichtung vorgesehenen Gehäuseöffnung und einer in der Trennwand - diese kann eine Spritzwand sein - vorgesehenen Trennwandöffnung - diese kann eine Stirnwandöffnung sein, wenn es sich bei der Trennwand um eine Stirnwand handelt - anzuordnen, dass bei anschließender Reduzierung des Abstands zwischen dem Gehäuse und der Trennwand ein Teil des V-förmigen Dichtkörpers, welcher den Übergang zwischen den beiden V-Schenkeln des Dichtkörpers bildet und mit einem Kontaktabschnitt an der Trennwand anliegt, zu der in der Trennwand vorgesehenen Öffnung hin umklappt.

"Rahmenförmig" bedeutet vorliegend, dass der Dichtkörper nicht offen, sondern ohne Enden, also geschlossen ausgebildet ist. Vom Begriff "rahmenförmig" sind also insbesondere Dichtungskörper mit runder, kreisrunder, ringförmiger, sowie kreisringförmiger Geometrie umfasst. Vom Begriff "rahmenförmig" sind außerdem insbesondere Dichtungskörper mit der Geometrie eines Rechtecks, auch mit abgerundeten Ecken, umfasst.

Experimentelle Untersuchungen haben gezeigt, dass die Dichtungseinrichtung nach einem solchen Umklappen bessere Dichteigenschaften aufweist. Somit wird mittels der vom rahmenförmigen Dichtkörper eingefassten Dichtkörperöffnung eine Fluidverbindung zwischen den beiden Öffnungen erzeugt, die sehr gut gegenüber der äußeren Umgebung abgedichtet ist. Eine solche Fluidverbindung bildet die gewünschte fluiddichte Durchführung für Leitungen von der der Klimatisierungseinrichtung abgewandten Seite der Trennwand - typischerweise einem Fahrzeuginnenraum - zu dem Klimatisierungsgerät selbst.

Da es bei dem hier vorgeschlagenen Vorgehen nicht erforderlich ist, die Dichtungseinrichtung durch die in der Trennwand vorgesehen Wandungsöffnung "durchzuziehen", kann der Montageaufwand bei der Montage der Dichtungseinrichtung zwischen dem Klimatisierungsgerät und der Trennwand erheblich reduziert werden.

Im Ergebnis wird also ein Verfahren geschaffen, bei welchem eine Fluidverbindung zwischen den im Gehäuse des Klimatisierungsgeräts und in der Trennwand vorgesehenen Öffnungen auf einfache Weise und mit sehr guten Dichteigenschaften abgedichtet werden kann.

Das erfindungsgemäße Verfahren zum Montieren einer Dichtungseinrichtung zwischen einem Gehäuse einer Klimatisierungseinrichtung und einer im oder am Fahrzeuginnenraum eines Kraftfahrzeugs vorhandenen Trennwand umfasst die folgenden drei Maßnahmen a), b) und c).

Gemäß einer ersten Maßnahme a) werden das Gehäuse und die Trennwand so relativ zueinander angeordnet, dass eine im Gehäuse vorhanden Gehäuseöffnung und eine in der Trennwand vorhandenen Wandungsöffnung benachbart und beabstandet zueinander positioniert sind. Zweckmäßig fluchten die beiden Öffnungen miteinander.

Gemäß einer weiteren, zweiten Maßnahme b) wird eine Dichtungseinrichtung mit einem geschlossenen Profilteil ausgebildeten, im Wesentlichen rahmenförmigen Dichtkörper, der im Profil im Wesentlichen V-förmig mit einem ersten und zweiten Schenkel ausgebildet ist, zwischen den beiden Öffnungen angeordnet.

Die Anordnung des Dichtkörpers erfolgt dabei derart, dass eine vom rahmenförmig ausgebildeten Dichtkörper eingefasste Dichtkörperöffnung fluidisch mit den beiden Öffnungen kommuniziert, so dass die beiden Öffnungen - also Wandungsöffnung und Gehäuseöffnung - über die Dichtkörperöffnung des Dichtkörpers in Fluidverbindung miteinander stehen. Auf diese Weise wird eine Fluidverbindung zwischen dem Gehäuse der Klimatisierungseinrichtung und der von der Dichtungseinrichtung abgewandten Seite der Trennwand - etwa einem Fahrzeuginnenraum des Kraftfahrzeug, der mittels der Trennwand vom Motorraum getrennt ist - gebildet.

Die beiden Schenkel gehen dabei im Profil des Dichtkörpers zweckmäßig in einem gemeinsamen Übergang, bevorzugt unter einem spitzen Winkel, ineinander über. Die beiden Schenkel sind bevorzugt integral aneinander ausgebildet, also materialeinheitlich und einstückig ausgebildet. Bevorzugt ist das Dichtungsmaterial des Dichtkörpers elastisch verformbar, besonders bevorzugt ein Elastomer.

Die Anordnung der Dichtungseinrichtung erfolgt beim erfindungsgemäßen Verfahren auch derart, dass im Profil des Dichtkörpers der Übergang zwischen den beiden Schenkeln des Dichtkörpers mittels eines Kontaktabschnitts an der Trennwand anliegt und ein vom Übergang abgewandter erster Endabschnitt des ersten Schenkels am Gehäuse anliegt. Zweckmäßig wird die Maßnahme a) zeitlich vor der Maßnahme b) durchgeführt.

Nach Durchführung der beiden Maßnahmen a) und b) bzw. b) und a) wird gemäß einer dritten Maßnahme c) ein Abstand zwischen den beiden Öffnungen durch Bewegen des Gehäuses der Klimatisierungseinrichtung auf die Trennwand zu zumindest solange reduziert, bis der Übergang des Dichtkörpers zur Wandungsöffnung hin umklappt. Im Zuge der Reduzierung des Abstands erfolgt typischerweise auch eine elastische Verformung des Dichtkörpers.

Gemäß einer bevorzugten Ausführungsform des Verfahrens wird der Dichtkörper vor Durchführung von Maßnahme c), also insbesondere im Zuge von Maßnahme b), so zwischen dem Gehäuse und der Trennwand positioniert, dass der Übergang zwischen den beiden Schenkeln des Dichtkörpers im Wesentlichen rechtwinklig zur Trennwand angeordnet ist. Hierzu ist der Dichtkörper so ausgebildet, dass nach Durchführung von Maßnahme c) der Übergang unter einem spitzen Winkel zur axialen Richtung hin angeordnet ist.

Gemäß einer vorteilhaften Weiterbildung wird in Maßnahme a) ein im Profil des Dichtkörpers am V-förmigen Dichtkörper angeformter Verlängerungsabschnitt durch die Wandungsöffnung durchgesteckt. Auf diese Weise kann ein zusätzlicher Spritzschutz für die Fluidverbindung zwischen Gehäuseöffnung und Wandungsöffnung realisiert werden

Bei einer vorteilhaften Weiterbildung des Verfahrens ist der erste Schenkel im Profil gekrümmt ausgebildet, wobei ein Wölbungsscheitel des ersten Schenkels dem zweiten Schenkel zugewandt ist. Dabei wird der Wölbungsradius des ersten Schenkels beim Umklappen des Übergangs in Maßnahme verkleinert. Vorteilhaft kann so ein für das Umklappen des Übergangs erforderlicher Kraftaufwand vermindert werden.

Gemäß einer weiteren bevorzugten Weiterbildung des Verfahrens weist der zweite Schenkel im Profil eine S-förmige Geometrie auf. Dabei wird die S-förmige Geometrie des zweiten Schenkels beim Umklappen des Übergangs gestreckt, insbesondere entfaltet.

Zweckmäßig ist am ersten sowie - alternativ oder zusätzlich - am zweiten Schenkel wenigstens eine Dick- oder/und wenigstens eine Dünnstelle vorhanden. Dabei ist mittels der wenigstens einen Dick- bzw. Dünnstelle eine Umklapprichtung, in welcher der Übergang in Maßnahme c) umgeklappt wird, festgelegt. Dies gewährleistet die Dichtheit der Anordnung.

Die Erfindung betrifft ferner eine Dichtungseinrichtung zum fluiddichten Abdichten einer Fluidverbindung zwischen einer Klimatisierungseinrichtung und einer Trennwand, an welcher die Klimatisierungseinrichtung bevorzugt befestigt oder zumindest angeordnet ist. Die Dichtungseinrichtung kann insbesondere für das vorangehend erläuterte erfindungsgemäße Verfahren verwendet werden, so dass sich die oben erläuterten Vorteile des erfindungsgemäßen Verfahrens auf die erfindungsgemäße Dichtungseinrichtung übertragen. Die erfindungsgemäße Dichtungseinrichtung umfasst einen als Profilteil ausgebildeten, rahmenförmigen Dichtkörper, der eine Dichtkörperöffnung umlaufend einfasst und der im Profil eine im Wesentlichen V-förmige Geometrie mit einem ersten und zweiten Schenkel aufweist, die in einem Übergang, vorzugsweise unter einem spitzen Winkel, ineinander übergehen.

Gemäß einer vorteilhaften Weiterbildung der Dichtungseinrichtung weist im Profil des Dichtkörpers dessen erster Schenkel einen vom Übergang abgewandten ersten axialen Endabschnitt auf, welcher unter einem spitzen Winkel in einen sich axial zum Übergang hin erstreckenden Verlängerungsabschnitt übergeht. Ein solcher Verlängerungsabschnitt kann durch die in der Trennwand vorgesehene Wandungsöffnung durchgesteckt werden, sodass auf diese Weise ein zusätzlicher Spritzschutz für die Fluidverbindung zwischen den beiden Öffnungen, also Gehäuseöffnung und Wandungsöffnung, realisiert wird.

Besonders bevorzugt erstreckt sich der Verlängerungsabschnitt in dem Längsschnitt entlang der axialen Richtung auch im Wesentlichen entlang der axialen Richtung, vorzugsweise geradlinig. Dies erleichtert das "Durchziehen" bzw. "Durchschieben" des Verlängerungsabschnitts durch die Wandungsöffnung. Damit einher geht wiederum eine weitere Vereinfachung des Montagevorgangs der Dichtungseinrichtung.

Gemäß einer weiteren vorteilhaften Weiterbildung weist in dem Längsschnitt entlang der axialen Richtung der zweite Schenkel einen vom Übergang abgewandten zweiten axialen Endabschnitt auf, von welchem winklig, vorzugsweise spitzwinklig, ein hakenartiger Fortsatz absteht. Ein solcher hakenartige Fortsatz kann zur zusätzlichen Anlage an die Trennwand verwendet werden, wodurch sich die erzielte akustische Dämmung verbessern lässt.

Gemäß einer anderen vorteilhaften Weiterbildung ist in dem Längsschnitt entlang der axialen Richtung an dem zweiten axialen Endabschnitt des zweiten Schenkels eine Ausnehmung ausgebildet. Eine solche Ausnehmung kann zur Aufnahme eines am Gehäuse vorgesehenen Vorsprungs verwendet werden, sodass durch Zusammenwirken des Vorsprungs mit der Ausnehmung eine besonders gute lateralen Fixierung des zweiten Schenkels und somit des gesamten Dichtkörpers am Gehäuse der Klimatisierungseinrichtung erreicht werden kann.

Gemäß einer weiteren bevorzugten Ausführungsform ist oder umfasst das Dichtungsmaterial des Dichtkörpers ein Elastomer, insbesondere EPDM, oder Kautschuk, oder Butyl-Dichtstoff.

Die Erfindung betrifft auch ein Kraftfahrzeug mit einem Fahrzeuginnenraum, welcher von einer Trennwand begrenzt ist oder in welchem eine Trennwand angeordnet ist, wobei in der Trennwand eine Wandungsöffnung angeordnet ist. Bevorzugt trennt die Trennwand den Fahrzeuginnenraum von einem Motorraum des Kraftfahrzeugs. Das Kraftfahrzeug umfasst ferner eine Klimatisierungseinrichtung, die benachbart zur Trennwand - bevorzugt im Motorraum des Kraftfahrzeugs - angeordnet ist und ein Gehäuse aufweist. Die Klimatisierungseinrichtung kann mit ihrem Gehäuse an der Trennwand befestigt sein. Des Weiteren umfasst das Kraftfahrzeug eine voranstehend vorgestellte, erfindungsgemäße Dichtungseinrichtung, so dass sich die voranstehend erläuterten Vorteile der Dichtungseinrichtung auf das erfindungsgemäße Kraftfahrzeug übertragen. Die Dichtungseinrichtung ist - vorzugsweise nach Durchführung des bereits oben erläuterten erfindungsgemäßen Verfahrens - so zwischen der Wandungsöffnung und der Gehäuseöffnung angeordnet, dass sie eine zwischen den beiden Öffnungen gebildeten Fluidverbindung fluiddicht gegenüber der äußeren Umgebung der Klimatisierungseinrichtung abdichtet.

Gemäß einer bevorzugten Ausführungsform des Kraftfahrzeugs stützt sich der elastisch verformte Übergangsabschnitt des Dichtkörpers mit dem Kontaktabschnitt an der Trennwand, insbesondere an einem die Wandungsöffnung der Trennwand einfassenden Einfassungsabschnitt der Trennwand, ab. Mit dieser Maßnahme gehen verbesserte Dichteigenschaften der Dichtungseinrichtung einher.

Gemäß einer weiteren bevorzugten Ausführungsform stützt sich der erste axiale Endabschnitt des Dichtkörpers außen an dem Gehäuse, insbesondere an einem die Gehäuseöffnung einfassenden Einfassungsabschnitt des Gehäuses, ab. Auch mit dieser Maßnahme gehen verbesserte Dichteigenschaften der Dichtungseinrichtung einher.

Gemäß einer weiteren bevorzugten Ausführungsform stützt sich auch der zweite axiale Endabschnitt des Dichtkörpers außen an dem Gehäuse, insbesondere an einem die Gehäuseöffnung einfassenden Einfassungsabschnitt des Gehäuses, ab. Auf diese Weise kann die Befestigung der Dichteinrichtung im Zwischenraum zwischen Klimatisierungseinrichtung und Trennwand mechanisch stabilisiert werden.

Gemäß einer vorteilhaften Weiterbildung kann zur verbesserten lateralen Fixierung des Dichtkörpers an der Klimatisierungseinrichtung ein am Gehäuse der Klimatisierungseinrichtung ausgebildeter Vorsprung in die am Dichtkörper ausgebildete Ausnehmung eingreifen. Zweckmäßig sind Ausnehmung und Vorsprung hierzu komplementär zueinander ausgebildet. Insbesondere kann der Vorsprung als ringförmiger Steg und die Ausnehmung als ringförmige Nut ausgebildet sein.

Gemäß einer weiteren vorteilhaften Weiterbildung kann auf der Trennwand eine thermische oder/und thermische Isolation angeordnet sein, auf welcher sich der hakenartige Fortsatz abstützt.

Besonders bevorzugt kann der Verlängerungsabschnitt die Wandungsöffnung durchgreifen. Auf diese Weise kann der bereits erwähnte Spritzschutz realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:

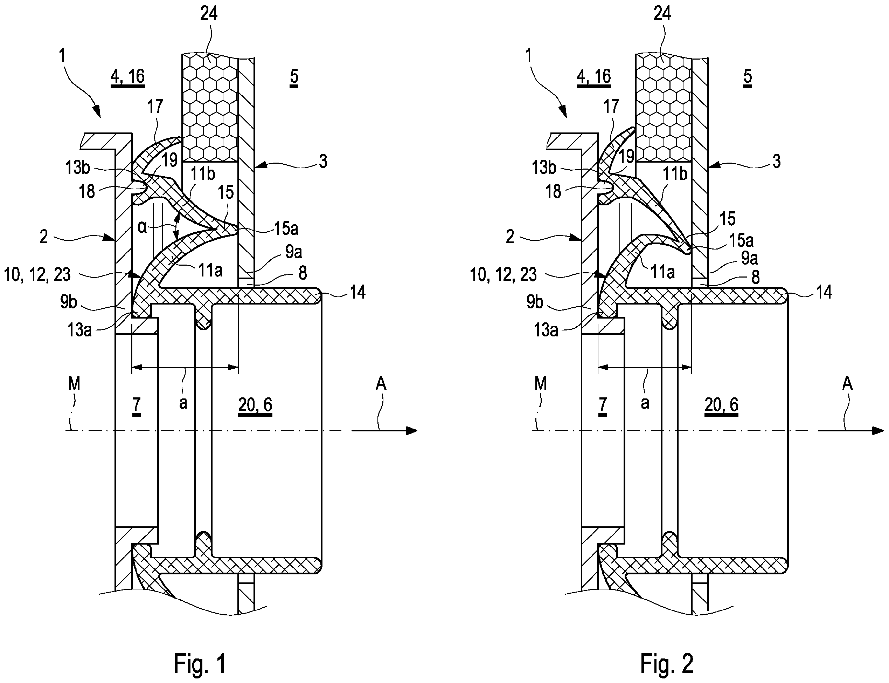

- Fig. 1, 2: das erfindungsgemäße Verfahren illustrierende Momentaufnahmen, wobei Figur 1 die Anordnung aus Klimatisierungseinrichtung, Dich-tungseinrichtung und Trennwand vor Durchführung von Maßnahme c) und die Figur 2 nach Durchführung von Maßnahme c) zeigt.

Figur 1 zeigt in einem Längsschnitt entlang einer axialen Richtung A eine Klimatisierungseinrichtung 1 mit einem Gehäuse 2 sowie eine Trennwand 3, welche einen Motorraum 4 von einem Fahrzeuginnenraum 5 eines Kraftfahrzeugs trennt. Die Trennwand 3 kann eine Spritzwand sein. Die Klimatisierungseinrichtung 1 ist gemäß Figur 1 im Motorraum 4 angeordnet. Das Gehäuse 2 der Klimatisierungseinrichtung 1 kann in geeigneter Weise an der Trennwand 3 befestigt sein (nicht gezeigt).

Des Weiteren illustriert Figur 1 eine zwischen der Klimatisierungseinrichtung 1 und der Trennwand 3 angeordnete Dichtungseinrichtung 10. Die Dichtungseinrichtung 10 ist zwischen dem Gehäuse 2 und der Trennwand 3 angeordnet, und zwar zwischen einer im Gehäuse 2 vorhandenen Gehäuseöffnung 7 und einer in der Trennwand 3 vorhandenen Wandungsöffnung 8.

Die Dichtungseinrichtung 10 dient zum fluiddichten Abdichten einer Fluidverbindung 6 zwischen der Gehäuseöffnung 7 und der Wandungsöffnung 8.

In dem in den Figuren gezeigten Längsschnitt entlang der axialen Richtung A fluchten die beiden Öffnungen 7, 8 miteinander. Unabhängig davon können die beiden Öffnungen 7, 8 in einer jeweiligen Draufsicht entlang der axialen Richtung A jeweils eine rahmenförmige geometrische Formgebung aufweisen. Die axiale Richtung A erstreckt sich dann entlang einer gemeinsamen Mittellängsachse M der beiden Öffnungen 7, 8.

Die Dichtungseinrichtung 10 umfasst einen als geschlossenes Profilteil 23 ausgebildeten, rahmenförmigen Dichtkörper 12, der eine Dichtkörperöffnung 20 umlaufend einfasst. In den Figuren ist der Dichtkörper 12 im Profil gezeigt. Demnach weist der Dichtkörper 12 im Profil eine im Wesentlichen V-förmige Geometrie mit einem ersten und zweiten Schenkel 11a, 11b auf, die in einem Übergang 15 unter einem spitzen Winkel α ineinander übergehen.

Das Gehäuse 2 und die Trennwand 3 sind über die Dichtungseinrichtung 10 miteinander verbunden, so dass ein von dem als Profilteil 23 ausgebildeten rahmenförmigen Dichtkörper 12 umlaufend eine Dichtkörperöffnung 20 einfasst, welche die Fluidverbindung 6 ausbildet, welche gegenüber der äußeren Umgebung 16 fluidisch abgedichtet ist. Somit können verschiedene Leitungen (nicht gezeigt) - beispielsweise Fluidleitungen zum Führen eines Kältemittels, die Teil eines Kälte- oder Heizkreislaufs sind, oder elektrische Leitungen, vom Fahrzeuginnenraum 5 zur Klimatisierungseinrichtung 1 geführt werden. Eine Beschädigung der in der Fluidverbindung 6, also in der Dichtkörperöffnung 20 angeordneten Leitungen, etwa durch Feuchtigkeit aus der äußeren Umgebung 16 bzw. dem Motorraum 4, wird aufgrund der mittels der Dichtungseinrichtung 10 erzielten Abdichtung vermieden.

Das Dichtungsmaterial des Dichtkörpers 12 ist elastisch verformbar. Hierfür in Betracht kommt ein Elastomer, beispielsweise EPDM, oder Kautschuk oder Butyl-Dichtstoff.

Im Profil weist der erste Schenkel 11a einen vom Übergang 15 abgewandten ersten axialen Endabschnitt 13a auf, welcher unter einem spitzen Winkel in einen sich axial zum Übergang 15 hin erstreckenden Verlängerungsabschnitt 14 übergeht. In dem in den Figuren gezeigten Längsschnitt erstreckt sich der Verlängerungsabschnitt 14 geradlinig entlang der axialen Richtung A.

Der elastisch verformte Übergang 15 des Dichtkörpers 12 stützt sich mit dem Kontaktabschnitt 15a an einem die Wandungsöffnung 8 der Trennwand 3 einfassenden Einfassungsabschnitt 9a ab. Der erste axiale Endabschnitt 13a des Dichtkörpers 12 stützt sich außen an dem Gehäuse 2, insbesondere an einem die Gehäuseöffnung 7 einfassenden Einfassungsabschnitt 9b des Gehäuses 2 ab. Ebenso stützt sich auch der zweite axiale Endabschnitt 13b des Dichtkörpers 10 - in radial größerem Abstand zur Mittellängsachse M der beiden Öffnungen 7, 8 als der erste axiale Endabschnitt 13a außen an dem Gehäuse 2 an dem Einfassungsabschnitt 9b ab.

Wie Figur 1 außerdem veranschaulicht, weist in dem gezeigten Profil der zweite Schenkel 11b einen vom Übergang 15 abgewandten zweiten axialen Endabschnitt 13b auf, von welchem winklig, vorzugsweise wie in Figur 1 dargestellt spitzwinklig, ein hakenartiger Fortsatz 17 absteht. Des Weiteren ist im Profil des Dichtkörpers 12 an dem zweiten axialen Endabschnitt 13b des zweiten Schenkels 11b eine Ausnehmung 18 ausgebildet.

In dem gezeigten Längsschnitt weist der zweite Schenkel 11b einen vom Übergang abgewandten zweiten axialen Endabschnitt 13b auf, von welchem im gezeigten Längsschnitt wiederum spitzwinklig ein hakenartiger Fortsatz 17 absteht. Der hakenartige Fortsatz 17 ist integral am zweiten Endabschnitt 13b ausgeformt.

Wie die Figuren 1 und 2 des Weiteren erkennen lassen, greift zur lateralen Fixierung des Dichtkörpers 10 ein am Gehäuse 2 der Klimatisierungseinrichtung 1 ausgebildeter Vorsprung 19 in die am Dichtkörper ausgebildete Ausnehmung 18 ein. Auf der Trennwand 3 kann außerdem, der Klimatisierungseinrichtung 1 zugewandt, eine akustische Isolation 24 angeordnet sein, auf welcher sich der hakenartige Fortsatz 17 abstützt.

Im Folgenden wird anhand der Figuren 1 und 2 das erfindungsgemäße Verfahren erläutert.

Gemäß Figur 1 werden in einer ersten Maßnahme a) das Gehäuses 2 und die Trennwand 3 so relativ zueinander angeordnet, dass die im Gehäuse 2 vorhanden Gehäuseöffnung 7 und die in der Trennwand 3 vorhandenen Wandungsöffnung 8 benachbart und beabstandet zueinander positioniert sind. Wie in Figur 1 gezeigt fluchten die beiden Öffnungen 7, 8 entlang der axialen Richtung A miteinander.

Des Weiteren wird gemäß einer zweiten Maßnahme b) der Dichtkörper 12 mit seinen beiden Schenkeln 11a, 11b und dem Übergang 15 zwischen der Gehäuseöffnung 7 und der Wandungsöffnung 8 angeordnet. Wie bereits erläutert erfolgt die Anordnung der Dichtungseinrichtung 12 zwischen dem Gehäuse 2 und der Trennwand 3 derart, dass im gezeigten Längsschnitt entlang der axialen Richtung A der Übergang 15 zwischen den beiden Schenkeln 11a, 11b mit einem Kontaktabschnitt 15a an der Trennwand 3 anliegt. Der vom Übergang 15 abgewandte erste Endabschnitt 13a des ersten Schenkels 11a liegt am Gehäuse 2 an.

Die Darstellung der Figur 1 veranschaulicht außerdem, dass der Dichtkörper 12 im Zuge der Maßnahme b) und somit vor Durchführung von Maßnahme c) so zwischen dem Gehäuse 2 und der Trennwand 3 positioniert wird, dass in dem gezeigten Längsschnitt der Übergang 15 bei an der Trennwand 3 anliegendem Kontaktabschnitt 15a im Wesentlichen unter einem rechten Winkel zur Trennwand 3 angeordnet ist.

Im Zuge von Maßnahme b) kann außerdem der Verlängerungsabschnitt 14 des Dichtkörpers 12 durch die Wandungsöffnung 7 durchgesteckt werden. Voranstehend erläutertes Szenario ist in der Darstellung der Figur 1 gezeigt.

Gemäß einer dritten Maßnahme c) wird nunmehr ein entlang der axialen Richtung A gemessener axialer Abstand a zwischen den beiden Öffnungen 7, 8 durch Bewegen des Gehäuses 2 auf die Trennwand 3 zumindest solange reduziert, bis der an der Trennwand 3 anliegende Übergang 15 zur Wandungsöffnung 8 hin umgeklappt wird. Der Kontaktabschnitt 15a bleibt dabei in mechanischem Kontakt mit der Trennwand 3. Während der Verringerung des Abstands a gemäß Maßnahme c) gleitet der Kontaktabschnitt 15a des Übergangs 15 Maßnahme unter elastischer Verformung des Übergangs 15 auf der Trennwand 3 zur Wandungsöffnung 8 hin.

Die Figur 2 illustriert die in Figur 1 gezeigte Anordnung nach Durchführung der Maßnahme c). Wie Figur 2 erkennen lässt, ist nach Durchführung von Maßnahme c) der Übergang 15 unter einem spitzen Winkel zur axialen Richtung A hin angeordnet. Anstelle eines Umklappens des Übergangs 15 zur Wandungsöffnung 8 hin - wie voranstehend erläutert und in Figur 2 dargestellt - ist es alternativ dazu auch möglich, dass der Übergang 15 von der Wandungsöffnung 8 weg umklappt (nicht gezeigt).

Um, insbesondere falls die Dichtungseinrichtung 12 mit einem homogenen Material realisiert ist, das Umklappen des Übergangs 15 in gewünschten Umklapprichtung zu bewirken, ist der erste Schenkel 11a im Profil beispielsweise gekrümmt ausgebildet, wobei ein Wölbungsscheitel des ersten Schenkels 11a dem zweiten Schenkel 11b zugewandt ist. Ein Wölbungsradius des ersten Schenkels wird beim Umklappen verkleinert. Der zweite Schenkel 11b ist zur Bewirkung des Umklappens des Übergangs 15 beispielsweise mit einem S-Profil realisiert, das beim Umklappen des Übergangs 15 entfaltet wird. Um zu verhindern, dass der Übergang 15 radial nach außen umklappt - statt wie gewünscht radial nach innen - können am ersten und am zweiten Schenkel 11a, 11b je im Profil Dick- sowie Dünnstellen vorhanden sein. Tendenziell weist der erste Schenkel 11a im Profil an einer dünnsten Stelle eine geringere Dicke auf, als der zweite Schenkel 11b an seiner dünnsten Stelle.

## Patentansprüche

1. Verfahren zum Montieren einer Dichtungseinrichtung (12) zwischen einem Gehäuse (2) einer Klimatisierungseinrichtung (1) und einer im Kraftfahrzeug vorhandenen Trennwand (3), umfassend die folgenden Maßnahmen:
a) Anordnen des Gehäuses (2) und der Trennwand (3) so relativ zueinander, dass eine im Gehäuse (2) vorhanden Gehäuseöffnung (7) und eine in der Trennwand (3) vorhandenen Wandungsöffnung (8) benachbart zueinander positioniert sind;
b) Anordnen einer Dichtungseinrichtung (10) mit einem als Profilteil (23) ausgebildeten rahmenförmigen Dichtkörper (12), der im Profil im Wesentlichen V-förmig mit einem ersten und zweiten Schenkel (11a, 11b) ausgebildet ist, zwischen den beiden Öffnungen (7, 8) derart, dass:
- eine vom rahmenförmigen Dichtkörper (12) umlaufend eingefasste Dichtkörperöffnung (24) fluidisch mit den beiden Öffnungen (7, 8) kommuniziert; und derart, dass
- im Profil ein Übergang (15) zwischen den beiden Schenkeln (11a, 11b) des Dichtkörpers (12) mittels eines Kontaktabschnitts (15a) des Übergangs (15) an der Trennwand (3) anliegt und ein vom Übergang (15) abgewandter erster Endabschnitt (13a) des ersten Schenkels am Gehäuse (2) anliegt;
c) Verringern eines Abstands (a) zwischen den beiden Öffnungen (7, 8) durch Bewegen des Gehäuses (2) auf die Trennwand (3) zu zumindest solange, bis der Übergang (15) zur Wandungsöffnung (8) hin oder von der Wandungsöffnung (8) weg umklappt.

2. Verfahren nach Anspruch 1,
**dadurch gekennzeichnet, dass**
- der Dichtkörper (12) vor Durchführung von Maßnahme c) so zwischen dem Gehäuse (2) und der Trennwand (3) positioniert wird, dass der Übergang (15) im Wesentlichen rechtwinklig zur Trennwand angeordnet ist;
- der Dichtkörper (12) so ausgebildet ist, dass in einem Längsschnitt entlang einer axialen Richtung (A), die von der Gehäuseöffnung (7) zur Wandungsöffnung (8) weist, nach Durchführung von Maßnahme c) der Übergang (15) unter einem spitzen Winkel zur axialen Richtung (A) hin angeordnet ist.

3. Verfahren nach Anspruch 1 oder 2,
**dadurch gekennzeichnet, dass**
in Maßnahme a) ein im Profil am V-förmigen Dichtkörper (12) angeformter Verlängerungsabschnitt (14) mit durch die Wandungsöffnung (8) durchgesteckt wird.

4. Verfahren nach einem der Ansprüche 1 bis 3,
**dadurch gekennzeichnet, dass**
- der erste Schenkel (11a) im Profil gekrümmt ausbildet ist, wobei ein Wölbungsscheitel des ersten Schenkels (11a) dem zweiten Schenkel (11b) zugewandt ist,
- der Wölbungsradius des ersten Schenkels (11a) beim Umklappen des Übergangs (15) in Maßnahme c) verkleinert wird.

5. Verfahren nach einem der vorhergehenden Ansprüche,
**dadurch gekennzeichnet, dass**
- der zweite Schenkel (11b) im Profil eine S-förmige Geometrie aufweist,
- die S-förmige Geometrie des zweiten Schenkels (11b) beim Umklappen des Übergangs (15) gestreckt, insbesondere entfaltet, wird.

6. Verfahren nach einem der vorhergehenden Ansprüche,
**dadurch gekennzeichnet, dass**
- am ersten oder/und am zweiten Schenkel (11a, 11b) wenigstens eine Dickstelle oder/und wenigstens eine Dünnstelle vorhanden ist,
- wobei mittels der wenigstens einen Dickstelle bzw. Dünnstelle eine Umklapprichtung, in welcher der Übergang (15) in Maßnahme c) umgeklappt wird, festgelegt ist.

7. Dichtungseinrichtung (10) zum fluiddichten Abdichten einer Fluidverbindung (6) zwischen einer Klimatisierungseinrichtung (1) und einer Trennwand, insbesondere unter Durchführung des Verfahrens nach einem der vorhergehenden Ansprüche,
mit einem als Profilteil (23) ausgebildeten, rahmenförmigen Dichtkörper (12), der eine Dichtkörperöffnung (24) umlaufend einfasst und der im Profil eine im Wesentlichen V-förmige Geometrie mit einem ersten und zweiten Schenkel (11a, 11b) aufweist, die in einem Übergang (15), vorzugsweise unter einem spitzen Winkel, ineinander übergehen.

8. Dichtungseinrichtung nach Anspruch 7,
**dadurch gekennzeichnet, dass**
im Profil der erste Schenkel (11a) einen vom Übergang (15) abgewandten ersten axialen Endabschnitt (13a) aufweist, welcher unter einem spitzen Winkel in einen sich zum Übergang (15) hin erstreckenden Verlängerungsabschnitt (14) übergeht.

9. Dichtungseinrichtung nach Anspruch 8,
**dadurch gekennzeichnet, dass**
sich der Verlängerungsabschnitt (14) im Profil geradlinig erstreckt.

10. Dichtungseinrichtung nach einem der Ansprüche 7 bis 9,
**dadurch gekennzeichnet, dass**
im Profil der zweite Schenkel (13b) einen vom Übergang (15) abgewandten zweiten axialen Endabschnitt (13a) aufweist, von welchem winklig, vorzugsweise spitzwinklig, ein hakenartiger Fortsatz (17) absteht.

11. Dichtungseinrichtung nach einem der Ansprüche 7 bis 10,
**dadurch gekennzeichnet, dass**
im Profil an dem zweiten axialen Endabschnitt (13b) des zweiten Schenkels (11b) eine Ausnehmung (18) ausgebildet ist.

12. Dichtungseinrichtung nach einem der Ansprüche 7 bis 11,
**dadurch gekennzeichnet, dass**
das Material des Dichtkörpers (12) ein Elastomer, insbesondere EPDM, umfasst oder ist.

13. Kraftfahrzeug,
- mit einem Fahrzeuginnenraum (4), welcher von einer Trennwand (3) begrenzt ist oder in welchem eine Trennwand (3) angeordnet ist, wobei in der Trennwand (3) eine Wandungsöffnung (8) angeordnet ist;
- mit einer benachbart zur Trennwand (3) angeordneten Klimatisierungseinrichtung (1), welches ein Gehäuse (2) aufweist, in welchem eine Gehäuseöffnung (7) angeordnet ist,
- mit einer Dichtungseinrichtung nach einem der Ansprüche 7 bis 12, welche - vorzugsweise unter Durchführung des Verfahrens nach einem der Ansprüche 1 bis 6 - so zwischen der Wandungsöffnung (8) und der Gehäuseöffnung (7) angeordnet ist, dass sie eine zwischen den beiden Öffnungen (7, 8) durch die Dichtkörperöffnung (20) gebildeten Fluidverbindung (6) fluiddicht gegenüber der äußeren Umgebung (16) der Klimatisierungseinrichtung (1) abdichtet.

14. Kraftfahrzeug nach Anspruch 13,
**dadurch gekennzeichnet, dass**
sich der elastisch verformte Übergangsabschnitt (14) des Dichtkörpers (12) mit dem Kontaktabschnitt (15) an der Trennwand (3), insbesondere an einer die Wandungsöffnung (8) einfassenden Einfassungsabschnitt der Trennwand (3), abstützt.

15. Kraftfahrzeug nach Anspruch 13 oder 14,
**dadurch gekennzeichnet, dass**
sich der erste axiale Endabschnitt (13a) des Dichtkörpers (12) außen an dem Gehäuse (2), insbesondere an einer die Gehäuseöffnung (7) einfassenden Einfassungsabschnitt (9a) des Gehäuses (2), abstützt.

16. Kraftfahrzeug nach einem der Ansprüche 13 bis 15,
**dadurch gekennzeichnet, dass**
sich der zweite axiale Endabschnitt (13b) des Dichtkörpers (12) außen an dem Gehäuse (2), insbesondere an einer die Gehäuseöffnung (7) einfassenden Einfassungsabschnitt (9a) des Gehäuses (2), abstützt.

17. Kraftfahrzeug nach einem der Ansprüche 13 bis 16,
**dadurch gekennzeichnet, dass**
zur lateralen Fixierung des Dichtkörpers (12) ein am Gehäuse (2) der Klimatisierungseinrichtung (1) ausgebildeter Vorsprung (19) in die am Dichtkörper (12) ausgebildete Ausnehmung (18) eingreift.

18. Kraftfahrzeug einem der Ansprüche 13 bis 17,
**dadurch gekennzeichnet, dass**
auf der Trennwand (3) eine akustische oder/und thermische Isolation (24) angeordnet ist, auch welcher sich der hakenartige Fortsatz (17) abstützt.

19. Kraftfahrzeug einem der Ansprüche 13 bis 18,
**dadurch gekennzeichnet, dass**
der Verlängerungsabschnitt (14) die Wandungsöffnung (8) durchgreift.
